# EUROPÄISCHE PATENTANMELDUNG

(11) **EP 1 006 302 A1**
(43) Veröffentlichungstag der Anmeldung: **07.06.2000**
(21) Anmeldenummer: 98811189.4
(22) Anmeldetag: 30.11.1998
(51) Int. Cl.: F16K 31/06

(54) **Elektromagnetisches Ventil für hydraulische Medien**

(71) Anmelder: Wärtsilä NSD Schweiz AG, 8401 Winterthur (CH)
(72) Erfinder: Wunder, Alfred Franz, 8442 Hettlingen (CH)
(74) Vertreter: Sulzer Management AG

(57) **Zusammenfassung**

Das Ventil umfasst ein Ventilgehäuse (4), einen Ventilschieber (6) und zwei Elektromagneten (2). Der Ventilschieber (6) ist im Gehäuse in einer Durchbohrung (13) verschiebbar angeordnet. Der Elektromagnet (2) enthält einen Anker (21), der aus zwei Teilen (24, 25) mit unterschiedlicher Sättigungsmagnetisierung besteht und so angeordnet ist, dass der Ankerteil (25) mit der höheren Sättigungsmagnetisierung dem Ventilschieber (6) gegenüberliegt. Durch diese Zuordnung wird die Schaltzeit weiter verkürzt und der Energieverbrauch verringert.

## Beschreibung

Die Erfindung betrifft ein elektromagnetisches Ventil für hydraulische Medien gemäss dem Oberbegriff des Anspruches 1.

Ein Ventil dieser Art ist aus der EP-A-0 870 959 bekannt. Das Ventil enthält ein Gehäuse, einen Ventilschieber, der in einer Durchbohrung im Gehäuse verschiebbar angeordnet ist und zwei Elektromagnete mit einem Ankerteil, der jeweils einer Stirnseite des Ventilschiebers zugeordnet ist, derart, dass bei Erregung der Elektromagneten der Ventilkörper jeweils verschoben wird. Die Durchbohrung im Gehäuse und der Ventilschieber sind mit einer Hartbeschichtung versehen. Mit einem solchen Ventil werden zwar kurze Schaltzeiten erreicht. Es hat sich jedoch gezeigt, dass ultraschnelle Schaltzeiten sich nicht realisieren lassen.

Der Erfindung liegt die Aufgabe zugrunde, ein elektromagnetisches Ventil zu verbessern.

Diese Aufgabe wird erfindungsgemäss durch die Merkmale des Anspruches 1 gelöst.

Die mit der Erfindung erzielbaren Vorteile sind darin zu sehen, dass durch die Zuordnung eines Ankerteiles mit hoher Sättigungsmagnetisierung zum Ventilschieber die Schaltzeit des Ventils weiter verkürzt und der Energiebedarf verringert wird. Zudem wird die Fertigung vereinfacht.

Nachfolgend wird die Erfindung anhand der beiliegenden Zeichnungen erläutert.

Es zeigen:
- Fig. 1: Einen Schnitt durch ein Ausführungsbeispiel eines erfindungsgemässen Ventils;
- Fig. 2: eine Einzelheit "A" in Fig. 1 im grösseren Massstab;
- Fig. 3: eine Einzelheit "B" in Fig. 1 im grösseren Massstab;
- Fig. 4: ein Endabschnitt des Ventilschiebers im Schnitt und
- Fig. 5: eine Ansicht in Richtung des Pfeiles C in Fig. 4.

Das Ventil besteht im wesentlichen aus einem Ventilteil 1 und zwei Antriebsteilen 2, die als Elektromagnete ausgebildet und mittels Schrauben 3 am Ventilteil 1 befestigt sind.

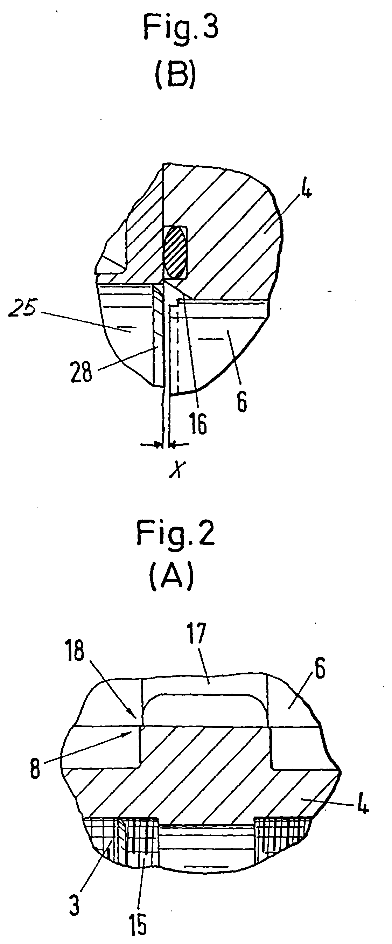

Der Ventilteil 1 besteht aus einem Gehäuse 4 mit einer Durchbohrung 5 entlang der Zylinderachse und aus einem Ventilschieber 6, der in der Durchbohrung hin und her bewegbar angeordnet ist. Das Gehäuse 4 besteht aus einem magnetischen Werkstoff. Im Gehäuse 4 sind zwei Ringnuten 7 ausgebildet, die parallel verlaufend in der Durchbohrung 5 ausgebildet sind, derart, dass die nebeneinanderliegenden Kanten jeweils eine Steuerkante 8 bilden (Fig. 2). Ferner sind ein Zufuhrkanal 11 und ein Rücklaufkanal 12, die jeweils in eine Ringnut 7 münden sowie ein Verbraucherkanal 13 im Gehäuse ausgebildet, der in die Durchbohrung 5 mündet. In den Stirnflächen des Gehäuses 4 sind ringförmige Ausnehmungen zur Aufnahme von Dichtungsringen 14 vorgesehen. Es sind vier Gewindelöcher 15 im Gehäuse 4 ausgebildet, um die Antriebsteile am Gehäuse zu befestigen. Im Gehäuse 1 sind an beiden Enden der Durchbohrung jeweils eine Abschrägung 16 ausgebildet (Fig. 3).

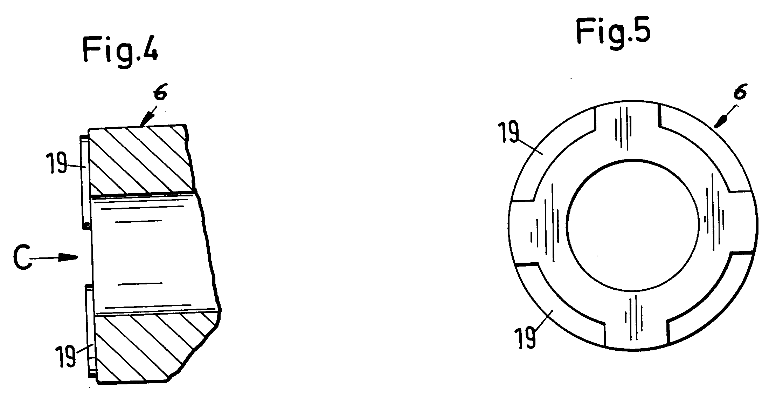

Der Ventilschieber 6 ist etwas kürzer als das Gehäuse 4 des Ventilteils 1. Der Ventilschieber 6 weist eine ringförmige Nut 17 auf, derart, dass eine Ringkammer entsteht, deren Kanten die Steuerkanten 18 am Ventilsehieber 3 bilden (Fig. 2). Der Ventilschieber 6 ist als Hohlzylinder ausgebildet und weist Radialbohrungen auf die mit dem Rücklaufkanal 12 kommunizieren. Am Umfang ist eine ringförmige Nut 17 ausgebildet, so dass eine Ringkammer entsteht, deren Kanten die Steuerkanten 18 am Ventilschieber 3 bilden (Fig. 2). Wie die Figuren 4 und 5 zeigen, sind an den Stirnflächen des Ventilschiebers 3 vier freistehende Auflageabschnitte 19 ausgebildet, deren Abstand von der restlichen Stirnfläche ca. 0,05 mm beträgt. Der Ventilschieber besteht aus magnetisierbarem Werkstoff.

Die Durchbohrung 13 im Gehäuse 4 und der Ventilschieber 6 und insbesondere die Steuerkanten 8, 18 sind mit einer Hartbeschichtung versehen, die z.B. aus Wolframkarbid oder Titannitrit besteht.

Jeder Elektromagnet besteht aus einer Spule 21, einen Spulenkörper 22, auf welchem die Spule direkt aufgewickelt ist und einen zweiteilig ausgebildeten Anker 23. Der Anker 23 umfasst einen quaderförmigen ersten Teil 24 und einen zylinderförmigen zweiten Teil 25. Der erste Teil 24 weist ausgehend von einer Stirnseite eine Ausnehmung zur Aufnahme des Spulenkörpers 22 mit der Spule 21 auf. An der anderen Stirnseite des ersten Teiles 24 ist eine zylindrische Ausnehmung 29 so ausgebildet, dass ein Wandabschnitt 31 gebildet wird. Der zweite Teil 25 des Ankers 23 ist an einer Stirnseite mit einem konischen Abschnitt 28 versehen und an der anderen Stirnseite weist einen zylindrischen Ansatz 41 auf Der zweite Teil 25 ist über den Ansatz 41 mittels einer Pressverbindung mit dem ersten Teil 24 verbunden, sodass eine ringförmige Ausnehmung im Anker 23 gebildet wird, in welcher der Spulenkörper 22 und die Spule 21 eingesetzt sind. Im Wandabschnitt 31 sind ferner Durchgangslöcher 30 für die Spulenanschlussleitungen (nicht dargestellt) vorgesehen.

Im zweiten Teil 25 ist eine Nut zur Aufnahme eines Dichtungsringes 26 ausgebildet. Der erste und zweite Teil 24, 25 des Ankers 23 bestehen aus einem weichmagnetischen Werkstoff, wobei der Werkstoff des ersten Teiles 24 eine Sättigungsmagnetisierung von ca. 1.0 T und der Werkstoff des zweiten Teiles 25 eine Sättigungsmagnetisierung von > 1.5 T aufweist.

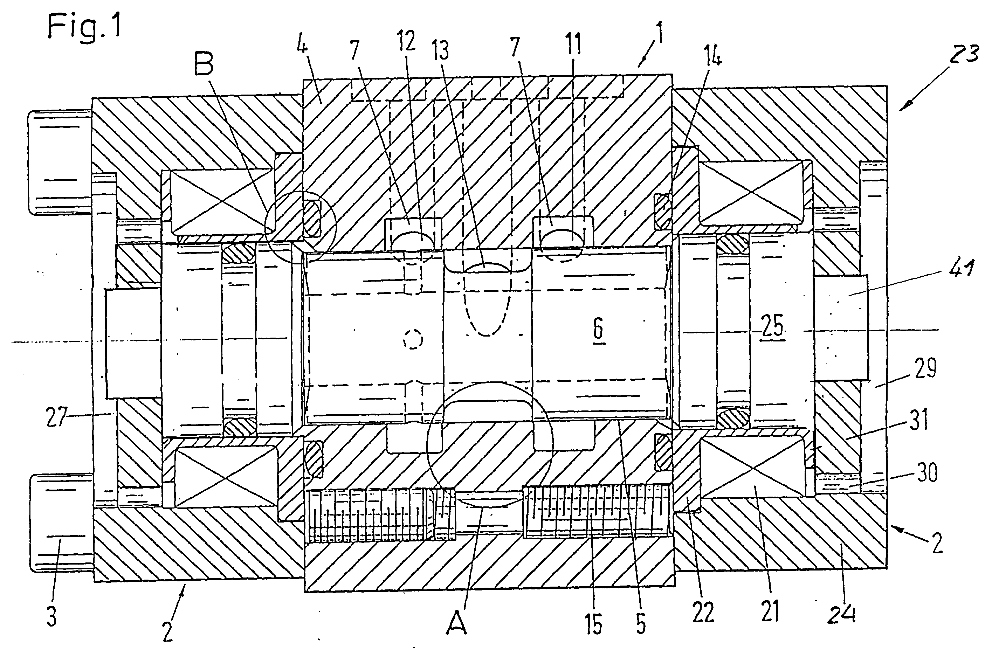

Wie die Fig. 1 zeigt, sind jeweils eine Stirnfläche des Ventilschiebers 6 und die Stirnfläche des zweiten Teils 25 des Ankers 23 gegenüberliegend angeordnet, d.h. der Teil des Ankers mit der höheren Sättigungsmagnetisierung ist benachbart zum Ventilschieber 6 angeordnet. Da der Werkstoff des zweiten Teiles eine höhere magnetische Induktion zulässt, wird die durch den Erregerstrom erzeugte Feldstärke weitgehend ausgenutzt, woraus sich die genannten Vorteile ergeben.

In der nachfolgenden Beschreibung wird davon ausgegangen, dass der Ventilschieber 6 an den zweiten Teil 25 des einen Elektromagneten 2 anliegt und zwischen dem Ventilschieber 6 und dem zweiten Teil 25 des anderen Elektromagneten 2 ein Spalt X vorhanden ist (Fig. 3).

Zur Betätigung des Ventils wird der Elektromagnet erregt. Durch das erzeugte Magnetfeld wird der Ventilschieber 6 gegen den zweiten Teil 25 des Ankers 23 gezogen, bis die Oberflächen der freistehenden Abschnitte 19 an der Stirnseite des zweiten Teiles 25 des Ankers anliegen. Um das Anziehen des Ventilkörpers 6 zu gewährleisten, muss das zwischen dem Ventilkörper 6 und dem zweiten Teil 25 des Ankers angesammelte Druckmittel, z.B. Oel in den Hohlraum im Ventilschieber verdrängt werden. Dadurch wird die Funktion des Ventils verbessert. Wird die Erregerspannung abgeschaltet, so wird der Ventilschieber durch die verbleibende Remanenz festgehalten. Der Erregerstrom erzeugt Wirbelströme im Spulenkörper. Um die Wirbelstromverluste zu minimieren, besteht der Spulenkörper aus Titan, welches eine geringe elektrische Leitfähigkeit von 0.23 · 10⁵ (Ω cm)⁻¹ aufweist.

## Patentansprüche

1. Elektromagnetisches Ventil für hydraulische Medien, welches Ventil ein Ventilgehäuse, mit einer Durchbohrung (13), einen Ventilschieber (6), und zwei Elektromagnete (2) mit einem Anker (23) enthält, wobei der Ventilschieber jeweils bei der Erregung eines Elektromagneten gegen den Anker (23) in eine Schaltstellung gezogen und bei Abschaltung der Erregerspannung durch die verbleibende Remanenz festgehalten wird, wobei die Durchbohrung (13) im Gehäuse (4) und der Ventilschieber (6) mit einer Hartbeschichtung versehen sind, dadurch gekennzeichnet, dass der Anker (23) einen ersten und zweiten Teil (24, 25) umfasst, die aus weichmagnetischen Werkstoff mit unterschiedlicher Sättigungsmagnetisierung bestehen und dass der Teil (25) des Ankers mit der höheren Sättigungsmagnetisierung dem Ventilschieber (6) so zugeordnet ist, dass deren Stirnflächen einander gegenüberliegen.

2. Ventil nach Anspruch 1, dadurch gekennzeichnet, dass der zweite Teil (25) des Ankers (23) aus einem weichmagnetischen Werkstoff besteht, welcher eine Sättigungsmagnetisierung von > 1.5 Tesla aufweist.

3. Ventil nach Anspruch 1, dadurch gekennzeichnet, dass der erste Teil (24) des Ankers (23) aus einem weichmagnetischen Werkstoff besteht, welcher eine Sättigungsmagnetisierung von 1.0 T aufweist.

4. Ventil nach einem der Ansprüche 1 bis 3, gekennzeichnet durch mindestens zwei freistehende Auflageabschnitte (19), die an den Stirnseiten des Ventilschiebers (3) ausgebildet und jeweils mit einem Elektromagneten in Wirkverbindung bringbar sind.

5. Ventil nach einem der Ansprüche 1 oder 4, dadurch gekennzeichnet, dass die Länge des Ventilgehäuses (4) kleiner als das 2,5-fache des Aussendurchmessers des Ventilschiebers (6) beträgt.

6. Ventil nach einem der Ansprüche 1 bis 5, dadurch gekennzeichnet, dass die Hartbeschichtung aus Titannitrit, Wolframkarbid oder dgl. besteht.

7. Ventil nach Anspruch 1, gekennzeichnet durch einen Spulenkörper (22) für die Magnetspule (21), der aus einem Material mit einer elektrischen Leitfähigkeit kleiner als 3,00 · 10⁵ (Ω cm)⁻¹ besteht.
